# EUROPÄISCHE PATENTSCHRIFT

(11) **EP 3 994 053 B1**
(45) Veröffentlichungstag und Bekanntmachung des Hinweises auf die Patenterteilung: **23.10.2024**
(21) Anmeldenummer: 20743081.0
(22) Anmeldetag: 03.07.2020
(51) Int. Cl.: B62J 11/13, B62K 19/30, B62K 25/28

(54) **KETTENSTREBENBAUTEIL MIT FAHRRADKOMPONENTE UND FAHRRAD**
CHAIN STAY WITH BICYCLE COMPONENT AND BICYCLE
ÉLÉMENT BASE AVEC COMPOSANT DE BICYCLETTE ET BICYCLETTE

(30) Priorität: 04.07.2019 DE 102019118170
(43) Veröffentlichungstag der Anmeldung: 11.05.2022
(73) Patentinhaber: Klieber, Jochen, 83342 Tacherting (DE)
(72) Erfinder: Klieber, Jochen, 83342 Tacherting (DE)
(74) Vertreter: WBH Wachenhausen Patentanwälte PartG mbB
(86) Internationale Anmeldenummer: PCT/EP2020/068894
(87) Internationale Veröffentlichungsnummer: WO 2021/001558

(56) Entgegenhaltungen:
- EP-A1- 3 287 354
- EP-A1- 3 287 354
- DE-U1- 202013 101 397
- DE-U1- 202013 101 397
- US-A1- 2006 232 041
- US-A1- 2006 232 041

## Beschreibung

### Technisches Gebiet

Die Erfindung bezieht sich auch auf ein Strebenbauteil für einen Hinterbau eines Fahrrads mit einer Fahrradkomponente zum Führen eines Schaltzugs in diesem.

Die Erfindung bezieht sich zudem auf ein Fahrrad mit einem solchen Strebenbauteil.

### Stand der Technik

Es ist bekannt, einen Schaltzug eines Mountainbikes zum Verbinden eines Schalthebels mit einem Schaltwerk abschnittsweise an oder in einer antriebsseitigen Kettenstrebe eines Hinterbaus zu montieren. Ein derartige Montage eines Schaltzugs kann eine antriebsseitige Zuführung des Schaltzugs zu der antriebsseitigen Kettenstrebe aufweisen. Ein derart antriebsseitig geführter Schaltzug kann benachbart zu einer Kurbelgarnitur eines Fahrradantriebs freiliegend am Fahrradrahmen angeordnet sein.

Aus EP 3 287 354 A1 ist ein gefederter Zweiradrahmen bekannt, bei welchem eine Schwingenlageraufnahme eine Aussparung aufweist. Die Schwingenlageraufnahme weist eine Aussparung auf, an welcher eine Öffnung angeordnet ist, um eine Leitungsdurchführung durch den Zweiradrahmen zu ermöglichen. Das Dokument DE 20 2013 101397 U1 offenbart auch einen Strebenbauteil, insbesondere Kettenstrebenbauteil, für einen Hinterbau eines Fahrrads, mit einer nichtantriebsseitigen Strebe und einer antriebsseitigen Strebe zum jeweiligen Verbinden eines Hauptrahmens des Fahrrads mit einem hinteren Laufrad des Fahrrads, einem Strebenjoch zum Aussteifen der beiden Streben, eine Führungseinrichtung zum integrierten Führen des Schaltzugs in dem Hinterbau und einen antriebsseitigen Führungsausgang zum Herausführen des Schaltzugsaus der antriebsseitigen Strebeaufweist, wobei der antriebsseitige Führungsausgang der Fahrradkomponente an der antriebsseitigen Strebe angeordnet ist.

### Darstellung der Erfindung

Die Erfindung betrifft in einem nicht beanspruchten Aspekt eine Fahrradkomponente zum Führen eines Schaltzugs von einer nichtantriebsseitigen Strebe eines Hinterbaus eines Fahrrads zu einer antriebsseitigen Strebe des Hinterbaus. Die Fahrradkomponente kann an einem Strebenbauteil eines Fahrrad nachrüstbar sein. Das Strebenbauteil kann ein Rahmenbauteil des Hinterbaus sein.

Der von der Fahrradkomponente führbare Schaltzug kann als ein Bowdenzug ausgebildet sein, welcher einen Schalthebel mit einem Schaltwerk zum Wechseln eines Gangs mechanisch verbinden kann.

Der Hinterbau des Fahrrads kann einen hinteren Rahmen eines Fahrrads aufweisen und mit einem Hauptrahmen des Fahrrads schwenkbar oder starr verbindbar sein. Jede Strebe des Hinterbaus kann zumindest abschnittsweise hohl sein beziehungsweise als ein Rohr ausgebildet sein und daher als eine Schaltzugführung fungieren. Bei der Schaltzugführung kann es sich um eine zumindest abschnittsweise in der Strebe verlaufende Schaltzugführung handeln. Das Rohr kann einen beliebigen Querschnitt, beispielsweise einen runden beziehungsweise einen ovalen Rohrquerschnitt aufweisen.

Der Begriff "antriebsseitig" bezieht sich auf die Antriebsseite eines Fahrrads. An der Antriebsseite kann ein Kettenantrieb oder ein Riemenantrieb an dem Hauptrahmen und an dem Hinterbau des Fahrrads angeordnet sein. Die Antriebsseite kann die in Fahrtrichtung des Fahrrads rechte Seite sein. Unter dem Begriff "antriebsseitig" kann daher auch in Fahrtrichtung rechts verstanden werden.

Der Begriff "nichtantriebsseitig" bezieht sich auf die Nichtantriebseite des Fahrrads, welche der Antriebsseite gegenüberliegt. An der Nichtantriebsseite kann eine Scheibenbremse für eine hydraulische Bremse an dem Hinterbau des Fahrrads angeordnet sein. Die Nichtantriebsseite kann die in Fahrtrichtung des Fahrrads linke Seite sein. Unter dem Begriff "nichtantriebsseitig" kann daher auch in Fahrtrichtung links verstanden werden.

Der Hinterbau des Fahrrads kann Kettenstreben aufweisen, welche sich zwischen Aufnahmen für ein hinteres Laufrad und einem Tretlagergehäuse erstrecken können. Die Kettenstreben können über ein Kettenstrebenjoch verbunden sein, welches sich quer zur Längsausdehnung der Kettenstreben erstrecken kann.

Bei der nichtantriebsseitigen Strebe des Hinterbaus kann es sich um eine nichtantriebsseitigen Kettenstrebe des Hinterbaus handeln. Die nichtantriebsseitige Kettenstrebe kann das Tretlagergehäuse mit einer nichtantriebsseitigen Aufnahme für das hintere Laufrad verbinden. Bei der antriebsseitigen Strebe des Hinterbaus kann es sich um eine antriebsseitige Kettenstrebe des Hinterbaus handeln. Die antriebsseitige Kettenstrebe kann das Tretlagergehäuse mit einer antriebsseitigen Aufnahme für das hintere Laufrad verbinden.

Der Hinterbau kann Sitzstreben aufweisen, welche sich zwischen den Aufnahmen für das hintere Laufrad und einer Rahmenwippe, einem oberen Bereich eines Sitzrohrs oder einem hinteren Bereich eine Rahmenoberrohrs erstrecken können. Das Sitzrohr und das Rahmenoberrohr können Streben eines Hauptrahmens des Fahrrads sein. Die Rahmenwippe kann an dem Rahmenoberrohr und/oder an dem Sitzrohr schwenkbar angeordnet sein, um die Sitzstreben mit dem Rahmenoberrohr dem Sitzrohr des Fahrrads schwenkbar zu verbinden. Die Sitzstreben können über ein Sitzstrebenjoch verbunden sein, welches sich quer zur Längsausdehnung der Kettenstreben erstrecken kann.

Bei der nichtantriebsseitigen Strebe des Hinterbaus kann es sich um eine nichtantriebsseitige Sitzstrebe des Hinterbaus handeln. Die nichtantriebsseitige Sitzstrebe kann die Rahmenwippe, den oberen Bereich des Sitzrohrs oder den hinteren Bereich des Rahmenoberrohrs mit der nichtantriebsseitigen Aufnahme für das hintere Laufrad verbinden. Bei der antriebsseitigen Strebe des Hinterbaus kann es sich um eine antriebsseitige Sitzstrebe des Hinterbaus handeln. Die antriebsseitige Sitzstrebe kann die Rahmenwippe, den oberen Bereich des Sitzrohrs oder den hinteren Bereich des Rahmenoberrohrs mit der antriebsseitigen Aufnahme für das hintere Laufrad verbinden.

Die Fahrradkomponente weist einen nichtantriebsseitigen Führungseingang zum Hineinführen des Schaltzugs in die nichtantriebsseitige Strebe auf. Der nichtantriebsseitige Führungseingang kann an der nichtantriebsseitigen Strebe montierbar sein. Der nichtantriebsseitige Führungseingang kann an einer Strebenausnehmung beziehungsweise an einem Strebendurchlass an der nichtantriebsseitigen Strebe montierbar sein. Der nichtantriebsseitige Führungseingang kann eine Ausnehmung beziehungsweise einen Durchlass zum Aufnehmen und Führen des Schaltzugs aufweisen. Alternativ dazu kann der nichtantriebsseitige Führungseingang auch eine Führungsrohröffnung eines Führungsrohrs zum Führen des Schaltzugs sein. Der nichtantriebsseitige Führungseingang beziehungsweise die Führungsrohröffnung kann daher auch beabstandet zur nichtantriebsseitigen Strebe an dieser anordbar sein.

Der Schaltzug kann nichtantriebsseitig durch den nichtantriebsseitigen Führungseingang in den Hinterbau hineingeführt werden. Der nichtantriebsseitige Führungseingang ermöglicht somit eine gemeinsame nichtantriebsseitig Montage des Schaltzugs und einer Bremsleitung für eine hintere Bremse des Fahrrads an dem Hautrahmen des Fahrrads und in einem Übergangsbereich zwischen dem Hauptrahmen und dem Hinterbau. Eine derartige Montage kann an einem Fahrrad freiliegend und antriebseitig verlegte Züge reduzieren.

Die Fahrradkomponente weist ferner einen antriebsseitigen Führungsausgang zum Herausführen des Schaltzugs aus der antriebsseitigen Strebe auf. Der antriebsseitige Führungsausgang kann an der antriebsseitigen Strebe montierbar sein. Der antriebsseitige Führungsausgang kann an einer Strebenausnehmung beziehungsweise an einem Strebendurchlass an der antriebsseitigen Strebe montierbar sein. Der antriebsseitige Führungsausgang kann eine Ausnehmung beziehungsweise einen Durchlass zum Aufnehmen und Führen des Schaltzugs aufweisen. Alternativ dazu kann der antriebsseitige Führungsausgang auch eine Führungsrohröffnung eines Führungsrohrs zum Führen des Schaltzugs sein. Der antriebsseitige Führungsausgang beziehungsweise die Führungsrohröffnung kann daher auch beabstandet zur antriebsseitigen Strebe an oder in dieser anordbar sein.

Der Schaltzug kann durch den antriebsseitigen Führungsausgang aus dem Hinterbau antriebsseitig hinausgeführt werden. Bei dem nichtantriebsseitigen Führungseingang und dem antriebsseitigen Führungsausgang kann es sich um verschiedene oder identische Teilkomponenten handeln.

Die Fahrradkomponente weist eine Führungseinrichtung zum integrierten Führen des Schaltzugs in dem Hinterbau auf. Die Fahrradkomponente kann daher eine in einen Hinterbau integrierbare Schaltzugführung aufweisen beziehungsweise als eine solche fungieren. Der Schaltzug kann daher mit der Führungseinrichtung durch das Innere des Hinterbaus geführt werden.

Der Schaltzug kann mit der Führungseinrichtung von der Nichtantriebsseite zu der Antriebsseite durch den Hinterbau hindurchgeführt werden. Die Fahrradkomponente ermöglicht daher einen Seitenwechsel einer Schaltzugführung von der Nichtantriebsseite zur Antriebsseite, wobei der Schaltzug zumindest abschnittsweise in Streben des Hinterbaus integrierbar ist. Der Schaltzug kann dabei auch in ein strebenverbindendes beziehungsweise strebenaussteifendes Joch integriert sein. Freiliegende Anordnungsabschnitte des Schaltzugs, insbesondere in einem Bereich benachbart zu einer Kurbelgarnitur eines Fahrradantriebs, können so mit der Fahrradkomponente an einem Fahrrad reduziert werden.

Die Führungseinrichtung kann dazu eingerichtet sein, um den Schaltzug von der nichtantriebsseitigen Strebe zu der antriebsseitigen Strebe zu führen. Die Führungseinrichtung kann in der nichtantriebsseitigen Strebe und/oder in der antriebsseitigen Strebe anordbar sein, um den Schaltzug von dem nichtantriebsseitigen Führungseingang zu dem antriebsseitigen Führungsausgang zu führen. Alternativ oder zusätzlich kann die Führungseinrichtung in einem Strebenjoch anordbar sein, welches die nichtantriebsseitige Strebe und die antriebsseitige Strebe aussteifen kann, um den Schaltzug von dem nichtantriebsseitigen Führungseingang zu dem antriebsseitigen Führungsausgang zu führen. Die Führungseinrichtung kann somit den Schaltzug zwischen dem nichtantriebsseitigen Führungseingang und dem antriebsseitigen Führungsausgang zumindest abschnittsweise innerhalb des Hinterbaurahmens führen. Die Führungseinrichtung kann ferner den nichtantriebsseitigen Führungseingang mit dem antriebsseitigen Führungsausgang verbinden. Mit der Fahrradkomponente kann ein Schaltzug somit benachbart zu einem Tretlagergehäuse im Hinterbau verlegt werden.

In einer Ausführungsform der Fahrradkomponente weist die Führungseinrichtung ein Führungsrohr auf, durch welches der Schaltzug geführt werden kann. Das Führungsrohr kann in mindestens einer Strebe und/oder einem Joch des Hinterbaus integrierbar sein. Ist der Schaltzug als Bowdenzug ausgebildet, kann das Führungsrohr den Bowdenzug führen. Das Führungsrohr kann eine Innendurchmesser aufweisen welcher dem Außendurchmesser eines Bowdenzugs entspricht. Bei dem Führungsrohr kann es sich beispielsweise um ein Aluminiumrohr handeln. Alternativ dazu kann es sich bei dem Führungsrohr auch um ein Kunststoffrohr handeln.

Das Führungsrohr der Führungseinrichtung kann derart geformt sein, dass es den Schaltzug in Streben des Hinterbaus beziehungsweise in einem Strebenjoch von der Antriebsseite zu der Nichtantriebsseite führen beziehungsweise umlenken kann. Ein mittlerer Bereich des Führungsrohrs kann in ein Strebenjoch integrierbar sein. Ein Endbereich des Führungsrohrs kann in die antriebsseitige Strebe und/oder ein weiterer Endbereich kann in die nichtantriebsseitige Strebe integrierbar sein.

Das Führungsrohr kann den nichtantriebsseitigen Führungseingang aufweisen, wobei der Führungseingang eine Führungsrohröffnung sein kann. Alternativ dazu kann das Führungsrohr auch mit dem nichtantriebsseitigen Führungseingang verbunden sein. Noch in einer weiteren Alternative ist das Führungsrohr eine von dem nichtantriebsseitigen Führungseingang separate Teilkomponente. Das Führungsrohr kann den antriebsseitigen Führungsausgang aufweisen, wobei der Führungsausgang eine Führungsrohröffnung sein kann. Alternativ dazu kann das Führungsrohr auch mit dem antriebsseitigen Führungsausgang verbunden sein. Noch in einer weiteren Alternative ist das Führungsrohr eine von dem antriebsseitigen Führungsausgang separate Teilkomponente.

In einer weiteren Ausführungsform der Fahrradkomponente ist das Führungsrohr zumindest abschnittsweise gekrümmt beziehungsweise gebogen. Das Führungsrohr kann einen gekrümmten Rohrabschnitt zum integrierten Führen des Schaltzugs in dem Hinterbau aufweisen. Alternativ oder zusätzlich kann das Führungsrohr einen gekrümmten Rohrabschnitt zum nichtantriebsseitigen Hineinführen des Schaltzugs in die nichtantriebsseitige Strebe des Schaltzugs aufweisen. Weiter alternativ oder zusätzlich kann das Führungsrohr einen gekrümmten Rohrabschnitt zum antriebsseitigen Herausführen des Schaltzugs aus der antriebsseitigen Strebe aufweisen. Mindestens zwei der gekrümmten Rohrabschnitte können miteinander verbunden sein oder voneinander beabstandet sein.

Das Führungsrohr kann zumindest abschnittsweise S-förmig ausgebildet sein. Ein S-förmiges Führungsrohr kann den Schaltzug von dem nichtantriebsseitigen Führungseingang durch den Hinterbau beziehungsweise durch Streben und/oder ein strebenaussteifendes Strebenjoch des Hinterbaus zu dem antriebsseitigen Führungsausgang führen. Dabei kann ein mittlerer geradliniger Bereich des S-förmigen Führungsrohr in das strebenaussteifende Strebenjoch integrierbar sein. Ein gekrümmter erster Endbereich des S-förmigen Führungsrohrs kann in die antriebsseitige Strebe integrierbar sein. Ein weiterer zum ersten Endbereich entgegengesetzt gekrümmter zweiter Endbereich kann in die nichtantriebsseitige Strebe integrierbar sein.

In einer weiteren Ausführungsform der Fahrradkomponente ist das Führungsrohr ein im Wesentlichen nicht elastisches Rohr. Der Schaltzug beziehungsweise dessen Bowdenzug kann dagegen einen biegbaren Seilzug aufweisen. Das Führungsrohr kann eine derartige Elastizität beziehungsweise Steifigkeit aufweisen, dass es den Schaltzug beziehungsweise dessen Bowdenzug in seinem Inneren Führen und Umlenken kann, ohne dass das Führungsrohr dadurch oder durch eine Betätigung des Schaltzugs beim Gangwechsel eine Verformung erfährt. Das Führungsrohr kann so einen gekrümmten Führungsverlauf des Schaltzugs in dem Hinterbau definieren. Das Führungsrohr kann ferner zum Aufnehmen einer Hülle des Schaltzugs ausgebildet sein. Bei der Hülle kann es sich um eine Hülle eines Bowdenzugs handeln.

In einer weiteren Ausführungsform der Fahrradkomponente erstreckt sich die Führungseinrichtung über den nichtantriebsseitigen Führungseingang. Alternativ oder zusätzlich kann sich die Führungseinrichtung auch über den antriebsseitigen Führungsausgang erstrecken. Weist die Führungseinrichtung ein Führungsrohr auf, kann sich dieses über den nichtantriebsseitigen Führungseingang und/oder über den antriebsseitigen Führungsausgang erstrecken. Der Führungseingang kann an dem Führungsrohr angeordnet sein, wobei der Führungseingang an einer Rohröffnung oder beabstandet zu dieser an dem Führungsrohr angeordnet sein kann. Alternativ oder zusätzlich dazu kann auch der Führungsausgang an dem Führungsrohr angeordnet sein, wobei der Führungsausgang an einer Rohröffnung oder beabstandet zu dieser an dem Führungsrohr angeordnet sein kann.

Das Führungsrohr kann an oder in dem Führungseingang beweglich angeordnet beziehungsweise gelagert sein. Alternativ oder zusätzlich kann das Führungsrohr an oder in dem Führungsausgang beweglich angeordnet beziehungsweise gelagert sein. Das Führungsrohr kann an oder in dem Führungseingang verschiebbar und/oder verschwenkbar angeordnet beziehungsweise gelagert sein. Alternativ oder zusätzlich kann das Führungsrohr an oder in dem Führungsausgang verschiebbar und/oder verschwenkbar angeordnet beziehungsweise gelagert sein.

In einer weiteren Ausführungsform der Fahrradkomponente weisen die Führungseinrichtung und der antriebsseitige Führungsausgang voneinander separate Teilkomponenten auf. Die Fahrradkomponente kann daher mindestens zwei Teilkomponenten aufweisen. Der antriebsseitige Führungsausgang kann ein Führungselement aufweisen, welches eine zu einem Führungsrohr der Führungseinrichtung separate Teilkomponente sein kann. Das Führungsrohr kann dazu ausgebildet sein, um den Schaltzug in die antriebsseitige Strebe hineinzuführen. Das Führungselement kann dazu ausgebildet sein, um den Schaltzug wieder aus der antriebsseitigen Strebe herauszuführen oder den Schaltzug in der antriebsseitigen Strebe zu führen. Das Führungselement kann dazu ausgebildet sein, den Schaltzug einem Schaltwerk zuzuführen. Zwischen dem Führungsrohr und dem Führungselement kann der Schaltzug somit frei verlaufen beziehungsweise durch das Führungselement abschnittsweise geführt sein.

Die Erfindung betrifft anspruchsgemäß ein Strebenbauteil für einen Hinterbau eines Fahrrads. Das Strebenbauteil kann schwenkbar an einem Hauptrahmen des Fahrrads anordbar sein. Das Strebenbauteil kann an einem Fahrrad oder einem Hinterbau nachrüstbar sein. Bei dem Strebenbauteil kann es sich um ein Kettenstrebenbauteil oder um ein Sitzstrebenbauteil handeln. Das Kettenstrebenbauteil kann die zu dem vorhergehenden Aspekt beschriebenen Kettenstreben aufweisen. Das Sitzstrebenbauteil kann die zu dem vorhergehenden Aspekt beschriebenen Sitzstreben aufweisen.

Das Strebenbauteil weist eine nichtantriebsseitige Strebe und eine antriebsseitige Strebe zum jeweiligen Verbinden eines Hauptrahmens des Fahrrads mit einem hinteren Laufrad des Fahrrads auf. Bei den Streben kann es sich um die entsprechenden Kettenstreben eines Kettenstrebenbauteils oder um die entsprechenden Sitzstreben eines Sitzstrebenbauteils handeln.

Die Kettenstreben und die Sitzstreben des Hinterbaus können antriebsseitig und nichtantriebseitig an Aufnahmen für das hintere Laufrad fest miteinander verbunden sein, beispielsweise verschweißt sein. Die Kettenstreben und die Sitzstreben des Hinterbaus können ferner antriebsseitig und nichtantriebseitig schwenkbar an dem Hauptrahmen anlenkbar sein. Die Kettenstreben können mittels einer Kettenstrebenlagerung schwenkbar an dem Hauptrahmen lagerbar sein. Die Sitzstreben können über eine Rahmenwippe und/oder eine Hinterbaufederung schwenkbar an dem Hauptrahmen anordbar sein. Die Kettenstreben und die Sitzstreben können ferner gemeinsam den Hinterbau des Fahrrads bilden, welcher schwenkbar an dem Hauptrahmen angeordnet sein kann.

Das Strebenbauteil weist ein Strebenjoch zum Aussteifen der beiden Streben auf. Das Strebenjoch kann ein zumindest abschnittsweise hohles Joch sein, welches die beiden Streben verbindet. Bei dem Strebenjoch kann es sich um ein Joch handeln, welches die Kettenstreben oder die Sitzstreben miteinander aussteifend verbindet. Das Strebenjoch kann daher ein Kettenstrebenjoch oder ein Sitzstrebenjoch sein.

Das Strebenbauteil weist zudem eine Fahrradkomponente nach dem vorhergehenden Aspekt auf, wobei der nichtantriebsseitige Führungseingang der Fahrradkomponente an der nichtantriebsseitigen Strebe und der antriebsseitige Führungsausgang der Fahrradkomponente an der antriebsseitigen Strebe angeordnet ist. Der nichtantriebsseitige Führungseingang der Fahrradkomponente kann in einer Ausnehmung der nichtantriebsseitigen Strebe angeordnet sein. Der antriebsseitige Führungsausgang der Fahrradkomponente kann in einer Ausnehmung der antriebsseitigen Strebe angeordnet sein.

Die Führungseinrichtung der Fahrradkomponente beziehungsweise das zum vorhergehenden Aspekt beschriebene Führungsrohr der Führungseinrichtung kann in dem Strebenjoch angeordnet sein. Das zum vorgehenden Aspekt beschriebene Führungselement der Führungseinrichtung kann ferner in der antriebsseitigen Strebe angeordnet sein. In einer Ausführungsform des Strebenbauteils verläuft die Führungseinrichtung der Fahrradkomponente durch das Strebenjoch, um den Schaltzug von dem nichtantriebsseitigen Führungseingang der Fahrradkomponente in die antriebsseitige Strebe zu führen. Weist die Führungseinrichtung das zum vorhergehenden Aspekt beschriebene Führungsrohr auf, kann dieses zumindest abschnittsweise in dem Strebenjoch angeordnet sein. Der Schaltzug kann so durch das Strebenjoch geführt werden. Ein Seitenwechsel der Schaltzugführung von der Nichtantriebsseite zu der Antriebsseite kann so durch Hindurchführen des Schaltzugs durch das Strebenjoch realisiert werden. Die Länge des Schaltzugs kann so in vorteilhafter Weise verkürzt werden.

In einer weiteren Ausführungsform des Strebenbauteils sind die Führungseinrichtung und der antriebsseitige Führungsausgang der Fahrradkomponente voneinander beabstandet an dem Kettenstrebenbauteil angeordnet. Die Führungseinrichtung kann das zum vorhergehenden Aspekt beschriebene Führungsrohr und/oder Führungselement aufweisen. Zwischen der Führungseinrichtung und dem antriebsseitigen Führungsausgang kann ein Hohlraum in der antriebsseitigen Strebe ausgebildet sein, in welchem der Schaltzug frei verlaufen kann. Der Schaltzug kann in dem Hohlraum beabstandet beziehungsweise berührungslos in der antriebsseitigen Strebe angeordnet sein. So kann in vorteilhafter Weise das Gewicht der Fahrradkomponente beziehungsweise des Strebenbauteils reduziert werden.

Die Erfindung betrifft in einem weiteren Aspekt ein Fahrrad, welches ein Strebenbauteil nach dem vorhergehenden Aspekt aufweist. Bei dem Fahrrad kann es sich um ein Mountainbike handeln. Das Strebenbauteil kann mittels einer Kettenstrebenlagerung schwenkbar an einem Hauptrahmen des Fahrrads angeordnet sein.

### Kurze Beschreibung der Figuren

- Figur 1: zeigt ein Strebenbauteil für einen Hinterbau eines Fahrrads und eine Fahrradkomponente zum Führen eines Schaltzugs gemäß einer jeweiligen Ausführungsform der Erfindung in einer perspektivischen Ansicht.
- Figur 2: zeigt das Strebenbauteil und die Fahrradkomponente von Figur 1 in derselben perspektivischen Ansicht ohne einen Bereich der antriebseitigen Strebe des Strebenbauteils.
- Figur 3a: zeigt das Strebenbauteil und die Fahrradkomponente von Figur 1 in einer Seitenansicht.
- Figur 3b: zeigt das Strebenbauteil und die Fahrradkomponente von Figur 1 in einer Schnittansicht.
- Figur 3c: zeigt das Strebenbauteil und die Fahrradkomponente von Figur 1 in einer weiteren Schnittansicht.

### Detaillierte Beschreibung von Ausführungsformen

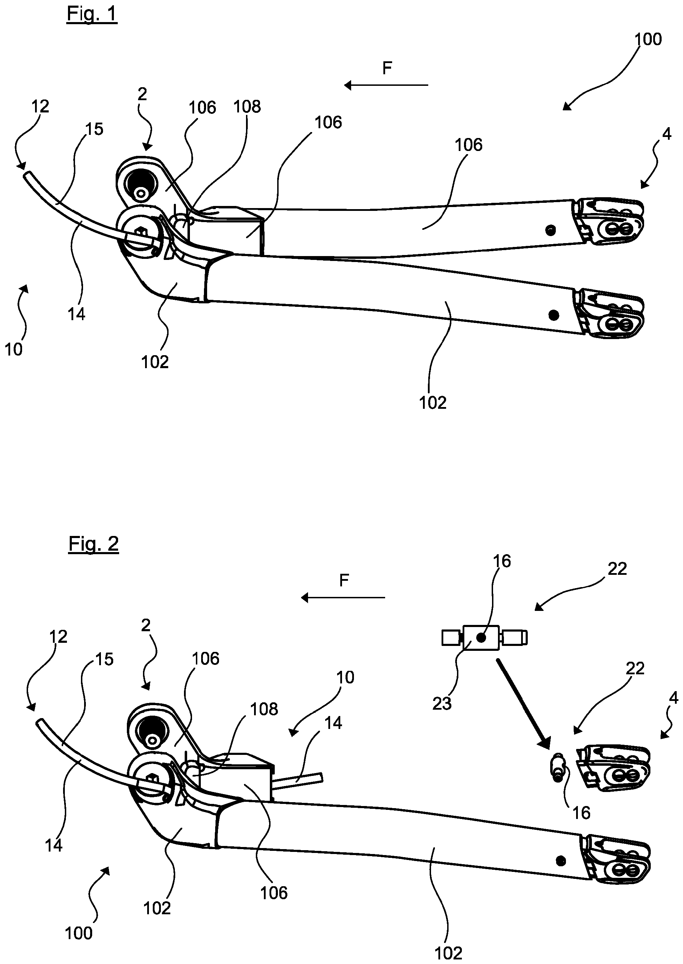

Figur 1 zeigt ein Kettenstrebenbauteil 100 mit einer Fahrradkomponente 10 zum Führen eines in den Figuren nicht gezeigten Schaltzugs durch das Kettenstrebenbauteil 100. Das Kettenstrebenbauteil 100 ist eine Rahmenkomponente eines in den Figuren nicht gezeigten Hinterbaus.

Das Kettenstrebenbauteil 100 weist eine nichtantriebsseitige Strebe 102 und eine antriebsseitige Strebe 106 auf, welche über ein Strebenjoch 108 miteinander verbunden sind. An den in Fahrtrichtung F eines in den Figuren nicht gezeigten Fahrrads vorderen Enden der Streben 102, 106 ist eine Kettenstrebenlagerung 2 zum schwenkbaren Lagern des Kettenstrebenbauteils 100 an einem Hauptrahmen des Fahrrads angeordnet. An den in Fahrtrichtung F hinteren Enden der Streben 102, 106 ist eine Rahmenverbindung 4 zum starren Verbinden des Kettenstrebenbauteils 100 mit Sitzstreben des Hinterbaus angeordnet.

In Figur 1 ist zudem ein Führungsrohr 14 der Fahrradkomponente 10 sichtbar. Das Führungsrohr 14 erstreckt sich in der gezeigten Ausführungsform außerhalb des Kettenstrebenbauteils 100. Das Führungsrohr 14 kann einen sich in Fahrtrichtung F nach vorne und nach oben gekrümmten Führungsrohrabschnitt 15 aufweisen, welcher sich außerhalb und durch das Kettenstrebenbauteil 100 erstrecken kann. Der Schaltzug kann in den Führungsrohrabschnitt 15 hinein und durch diesen verlaufen. Der Schaltzug kann ferner mit diesem in das Strebenjoch 108 hineingeführt werden. Die Fahrradkomponente 10 weist hierfür einen nichtantriebsseitigen Führungseingang 12 auf. Das in Fahrtrichtung F vordere Ende des Führungsrohrs 14 bildet in der gezeigten Ausführungsform den nichtantriebsseitigen Führungseingang 12.

In einer nicht gezeigten weiteren Ausführungsform kann der nichtantriebsseitige Führungseingang benachbart zu der Kettenstrebenlagerung 2 und zu dem Strebenjoch 108 an dem Kettenstrebenbauteil 100 angeordnet sein. Das Führungsrohr 14 kann in dieser nicht gezeigten Ausführungsform beweglich in dem nichtantriebsseitigen Führungseingang angeordnet sein. Das Führungsrohr 14 kann dabei durch den Führungseingang verlaufen, welcher als ringartige oder kugelgelenkartige Lagerung ausgebildet sein kann, um das Führungsrohr 14 in dem Führungseingang zu lagern. Der Führungseingang kann daher auch als eine ringartiges oder kugelgelenkartiges Führungsrohrlager ausgebildet sein, welches an der nichtantriebsseitigen Strebe 102 angeordnet sein kann.

In Figur 2 ist das Kettenstrebenbauteil 100 aus Figur 1 ohne einen in Fahrtrichtung F hinteren Bereich der antriebsseitigen Strebe 106 gezeigt. Das Führungsrohr 14 erstreckt sich abschnittsweise in die antriebsseitige Strebe 106, um den Schaltzug aus dem Strebenjoch 108 in die antriebsseitige Strebe 106 zu führen. In einem in Fahrtrichtung F hinteren Bereich der antriebsseitigen Strebe 106 kann zudem ein Führungselement 22 angeordnet sein. Eine Führungseinrichtung zum integrierten Führen des Schaltzugs in dem Kettenstrebenbauteil 100 ist in der gezeigten Ausführungsform durch das Führungsrohr 14 und das Führungselement 22 gebildet.

Das Führungselement 22 kann einen antriebseitigen Führungsausgang 16 aufweisen, durch welchen der Schaltzug aus der antriebsseitigen Strebe 106 herausgeführt werden kann. Das Führungselement 22 kann ferner in der antriebsseitigen Strebe 106 befestigt, sein, beispielsweise verschraubt sein, wobei der Führungsausgang 16 in der antriebsseitigen Strebe 106 befestigt sein kann. Das Führungselement 22 kann in der antriebsseitigen Strebe 106 schwenkbar befestigt sein. Das Führungselement 22 kann einen schwenkbar an den Innenseiten der antriebsseitigen Strebe 106 befestigten Bolzen 23 aufweisen. Eine Durchgangsbohrung durch den Bolzen 23 kann ferner den antriebsseitigen Führungsausgang 16 ausbilden, wobei der Schaltzug durch die Durchgangsbohrung verlaufen kann beziehungsweise durch diese geführt sein kann.

Zwischen dem Führungsrohr 14 und dem Führungselement 22 kann der Schaltzug in der antriebsseitigen Strebe 106 frei verlaufen.

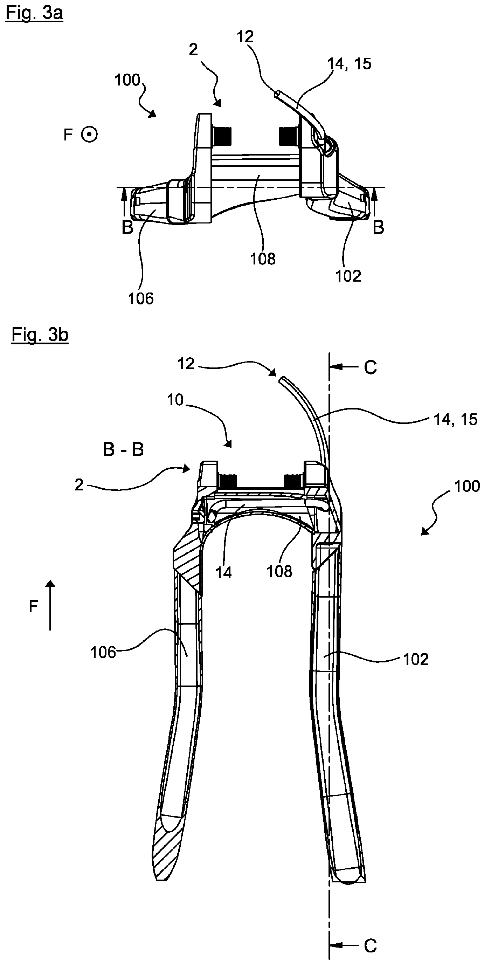

In Figur 3a ist das Kettenstrebenbauteil 100 mit der Fahrradkomponente 10 in einer Seitenansicht gegen die Fahrtrichtung F gezeigt. Der nichtantriebsseitige Führungseingang 12 kann oberhalb von der nichtantriebsseitigen Strebe 102 sein.

Das Kettenstrebenbauteil 100 mit der Fahrradkomponente 10 ist in Figur 3b als Draufsicht auf die in Figur 3a eingezeichnete Schnittebene B - B von unten nach oben gezeigt. In Figur 3b ist der Verlauf des Führungsrohrs 14 durch das Strebenjoch 108 sichtbar. Das Führungsrohr 14 verläuft von dem nichtantriebsseitigen Führungseingang 12 durch das Strebenjoch 108 in die antriebsseitige Strebe 106 und zu dem in Figur 3b nicht gezeigten antriebsseitigen Führungsausgang 16 gekrümmt und S-förmig.

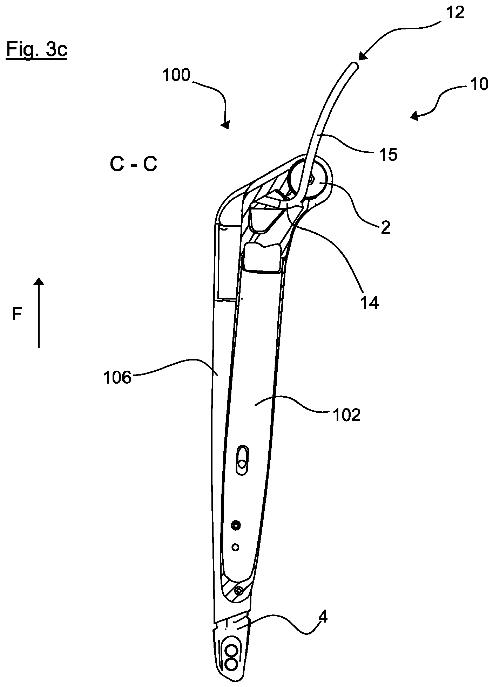

Das Kettenstrebenbauteil 100 mit der Fahrradkomponente 10 ist in Figur 3c als Draufsicht auf die in Figur 3b eingezeichnete Schnittebene C - C aus Blickrichtung von der Nichtantriebsseite gezeigt. In Figur 3c ist der Verlauf des Führungsrohrs 14 durch die nichtantriebsseitige Strebe 12 sichtbar. Das Führungsrohr 14 verläuft von dem nichtantriebsseitigen Führungseingang 12 in einem in Fahrtrichtung F vorderen Bereich der nichtantriebsseitigen Strebe 102 in das Strebenjoch 108 gekrümmt und S-förmig.

### Bezugszeichen

- 2: Kettenstrebenlagerung
- 4: Rahmenverbindung
- 10: Fahrradkomponente
- 12: nichtantriebsseitiger Führungseingang
- 14: Führungsrohr
- 15: Führungsrohrabschnitt
- 16: antriebsseitiger Führungsausgang
- 22: Führungselement
- 23: Bolzen
- 100: Kettenstrebenbauteil
- 102: nichtantriebsseitige Strebe
- 106: antriebsseitige Strebe
- 108: Strebenjoch
- F: Fahrtrichtung

## Patentansprüche

1. Strebenbauteil, insbesondere Kettenstrebenbauteil (100), für einen Hinterbau eines Fahrrads, mit
einer nichtantriebsseitigen Strebe (102) und einer antriebsseitigen Strebe (106) zum jeweiligen Verbinden eines Hauptrahmens des Fahrrads mit einem hinteren Laufrad des Fahrrads,
einem Strebenjoch (108) zum Aussteifen der beiden Streben (102, 106),
wobei das Strebenbauteil eine Fahrradkomponente (10) aufweist, welche
- einen nichtantriebsseitigen Führungseingang (12) zum Hineinführen des Schaltzugs in die nichtantriebsseitige Strebe (102),
- eine Führungseinrichtung zum integrierten Führen des Schaltzugs in dem Hinterbau und
- einen antriebsseitigen Führungsausgang (16) zum Herausführen des Schaltzugs aus der antriebsseitigen Strebe (106)
aufweist,
wobei der nichtantriebsseitige Führungseingang (12) der Fahrradkomponente (10) an der nichtantriebsseitigen Strebe (102) und der antriebsseitige Führungsausgang (16) der Fahrradkomponente (10) an der antriebsseitigen Strebe (106) angeordnet ist.

2. Strebenbauteil nach Anspruch 1,
**dadurch gekennzeichnet, dass**
die Führungseinrichtung der Fahrradkomponente (10) durch das Strebenjoch (108) verläuft, um den Schaltzug von dem nichtantriebsseitigen Führungseingang (12) der Fahrradkomponente (10) in die antriebsseitige Strebe (106) zu führen.

3. Strebenbauteil nach einem der Ansprüche 1 oder 2,
**dadurch gekennzeichnet, dass**
die Führungseinrichtung und der antriebsseitige Führungsausgang (16) der Fahrradkomponente (10) voneinander beabstandet an dem Kettenstrebenbauteil (100) angeordnet sind.

4. Strebenbauteil nach einem der vorhergehenden Ansprüche,
**dadurch gekennzeichnet, dass**
die Führungseinrichtung ein Führungsrohr (14) aufweist, durch welches der Schaltzug geführt werden kann.

5. Strebenbauteil nach Anspruch 4,
**dadurch gekennzeichnet, dass**
das Führungsrohr (14) zumindest abschnittsweise gekrümmt ist und insbesondere zumindest abschnittsweise S-förmig ausgebildet ist.

6. Strebenbauteil nach Anspruch 4 oder 5,
**dadurch gekennzeichnet, dass**
das Führungsrohr (14) ein im Wesentlichen nicht elastisches Rohr ist, welches zum Aufnehmen einer Hülle des Schaltzugs ausgebildet ist.

7. Strebenbauteil nach einem der vorhergehenden Ansprüche,
**dadurch gekennzeichnet, dass**
sich die Führungseinrichtung über den nichtantriebsseitigen Führungseingang (12) erstreckt.

8. Strebenbauteil nach einem der vorhergehenden Ansprüche,
**dadurch gekennzeichnet, dass**
die Führungseinrichtung und der antriebsseitige Führungsausgang (16) voneinander separate Teilkomponenten aufweisen.

9. Fahrrad, insbesondere Mountainbike,
**dadurch gekennzeichnet, dass** das Fahrrad
ein Strebenbauteil nach einem der vorhergehenden Ansprüche aufweist.

## Claims

1. Stay component, in particular chain stay component (100), for a rear structure of a bicycle, with a non-drive-side stay (102) and a drive-side stay (106) for the respective connection of the bicycle to a rear road wheel of the bicycle,
a stay yoke (108) for stiffening the two stays (102, 106),
the stay component having a bicycle component (10) which has
- a non-drive-side guide inlet (12) for guiding the shift cable into the non-drive-side stay (102),
- a guide device for integrated guidance of the shift cable in the rear structure, and
- a drive-side guide outlet (16) for guiding the shift cable out of the drive-side stay (106),
wherein the non-drive-side guide inlet (12) of the bicycle component (10) is arranged on the non-drive-side stay (102), and the drive-side guide outlet (16) of the bicycle component (10) is arranged on the drive-side stay (106) .

2. Stay component according to Claim 1,
**characterized in that**
the guide device of the bicycle component (10) runs through the stay yoke (108), in order to guide the shift cable from the non-drive-side guide inlet (12) of the bicycle component (10) into the drive-side stay (106).

3. Stay component according to either of Claims 1 or 2,
**characterized in that**
the guide device and the drive-side guide outlet (16) of the bicycle component (10) are arranged spaced apart from one another on the chain stay component (100).

4. Stay component according to one of the preceding claims,
**characterized in that**
the guide device has a guide tube (14), through which the shift cable can be guided.

5. Stay component according to Claim 4,
**characterized in that**
the guide tube (14) is curved at least in sections and, in particular, is of S-shaped configuration at least in sections.

6. Stay component according to Claim 4 or 5,
**characterized in that**
the guide tube (14) is a substantially non-elastic tube which is configured to receive a sheath of the shift cable.

7. Stay component according to one of the preceding claims,
**characterized in that**
the guide device extends via the non-drive-side guide inlet (12).

8. Stay component according to one of the preceding claims,
**characterized in that**
the guide device and the drive-side guide outlet (16) have partial components which are separated from one another.

9. Bicycle, in particular mountain bike,
**characterized in that** the bicycle
has a stay component according to one of the preceding claims.

## Revendications

1. Composant tendeur, notamment composant tendeur de chaîne (100), pour une structure arrière d'une bicyclette, avec
un tendeur côté non-entraînement (102) et un tendeur côté entraînement (106) pour relier respectivement un cadre principal de la bicyclette à une roue arrière de la bicyclette,
un joug de tendeur (108) pour rigidifier les deux tendeurs (102, 106),
le composant tendeur présentant un composant de bicyclette (10), qui présente
- une entrée de guidage côté non-entraînement (12) pour introduire le câble de changement de vitesse dans le tendeur côté non-entraînement (102),
- un dispositif de guidage pour guider de manière intégrée le câble de changement de vitesse dans la structure arrière, et
- une sortie de guidage côté entraînement (16) pour faire sortir le câble de changement de vitesse du tendeur côté entraînement (106),
l'entrée de guidage côté non-entraînement (12) du composant de bicyclette (10) étant agencée sur le tendeur côté non-entraînement (102) et la sortie de guidage côté entraînement (16) du composant de bicyclette (10) étant agencée sur le tendeur côté entraînement (106).

2. Composant tendeur selon la revendication 1, **caractérisé en ce que** le dispositif de guidage du composant de bicyclette (10) s'étend à travers le joug de tendeur (108) pour guider le câble de changement de vitesse depuis l'entrée de guidage côté non-entraînement (12) du composant de bicyclette (10) dans le tendeur côté entraînement (106).

3. Composant tendeur selon l'une quelconque des revendications 1 ou 2, **caractérisé en ce que** le dispositif de guidage et la sortie de guidage côté entraînement (16) du composant de bicyclette (10) sont agencés espacés l'un de l'autre sur le composant tendeur de chaîne (100).

4. Composant tendeur selon l'une quelconque des revendications précédentes, **caractérisé en ce que** le dispositif de guidage présente un tube de guidage (14) à travers lequel le câble de changement de vitesse peut être guidé.

5. Composant tendeur selon la revendication 4, **caractérisé en ce que** le tube de guidage (14) est courbé au moins par sections et est notamment réalisé en forme de S au moins par sections.

6. Composant tendeur selon la revendication 4 ou 5, **caractérisé en ce que** le tube de guidage (14) est un tube essentiellement non élastique, qui est réalisé pour recevoir une gaine du câble de changement de vitesse.

7. Composant tendeur selon l'une quelconque des revendications précédentes, **caractérisé en ce que** le dispositif de guidage s'étend sur l'entrée de guidage (12) côté non-entraînement.

8. Composant tendeur selon l'une quelconque des revendications précédentes, **caractérisé en ce que** le dispositif de guidage et la sortie de guidage côté entraînement (16) présentent des composants partiels séparés les uns des autres.

9. Bicyclette, notamment VTT, **caractérisée en ce que** la bicyclette présente un composant tendeur selon l'une quelconque des revendications précédentes.
